Europäisches Patentamt

(19) European Patent Office

Office européen des brevets

(11) **EP 0 758 739 A1**

(12) **EUROPEAN PATENT APPLICATION**

(43) Date of publication:
19.02.1997 Bulletin 1997/08

(51) Int. Cl.$^6$: **G01D 3/028**, G01L 1/22, G01L 9/06

(21) Application number: 96112875.8

(22) Date of filing: 09.08.1996

(84) Designated Contracting States:
DE GB IT

(30) Priority: 11.08.1995 FR 9509757

(71) Applicant: MOTOROLA SEMICONDUCTEURS S.A.
F-31023 Toulouse Cédex (FR)

(72) Inventors:
• Perraud, Eric
31400 Toulouse (FR)

• Allier, Jean Francois
31520 Ramonville (FR)

(74) Representative: Spaulding, Sarah Jane et al
Motorola,
European Intellectual Property Operations,
Midpoint,
Alencon Link
Basingstoke, Hampshire RG21 7PL (GB)

(54) **Sensor module**

(57) A sensor module (4, 214) for coupling to a processing unit (6, 206), comprises a semiconductor piezoresistive sensor having an output for providing an output signal representative of the pressure sensed by the sensor, storage circuitry (14, 214) for storing calibration data for the piezoresistive sensor and for coupling to the processing unit, temperature detecting circuitry (10, 210) connected to the piezoresistive sensor for generating a temperature signal representative of the detected temperature of the piezoresistive sensor, and for coupling to the processing unit, wherein in operation calibration data and the temperature signal are provided to the processing unit which processes the calibration data and temperature signal to generate control signals, which control signals preferably include at least one pulse width modulated control signal (PWM1), and offset compensation circuitry (12, 212) coupled to the output of the piezoresistive sensor and for coupling to the processing unit to receive the control signals, the offset compensation circuitry for adjusting the sensor output signal in response to the control signals so as to provide an offset compensated output signal which is independent of variations in sensor performance.

FIG. 1

EP 0 758 739 A1

## Description

Field of the Invention

This invention relates to a sensor module comprising a semiconductor sensor, such as a piezoresistive pressure sensor.

Background of the Invention

Semiconductor sensors are found today in a large number of medical and industrial applications. For example, piezoresistive pressure sensors are used for pump water pressure control and blood pressure sensing.

In a number of new emerging applications, semiconductor sensors are required to meet increasingly tougher specifications. For water level sensing applications for washing machines and dish washers for example, pressure sensors are required to have high accuracy (1% or 2% full scale) over a large temperature range (0-70°C), a low pressure range (0 to 300 mm of water), be of low cost and be easy to handle for high volume production.

For the above water level sensing application and other applications requiring a low pressure range, piezoresistive pressure sensor offset can be a significant problem, since the offset may be a large amount (50mV) of the sensor output signal (span = 20 to 30 mV). Thus, offset must be compensated for in such applications.

A further problem arises due to the large variations in sensor performance or the basic parameters of the piezoresistive pressure sensor, such as offset, span (or sensitivity) and temperature coefficients which can occur between different sensors and also with temperature. Each sensor module therefore requires calibration before use and compensation for variations in offset and sensitivity due to temperature drift.

An example of when a sensor module requires calibrating occurs when a pressure sensor in a washing machine has to be replaced with a new sensor. The engineer has to perform a calibration for the new pressure sensor in the washing machine. This may require the control microprocessor to be reprogrammed in the washing machine which is a complex and time consuming process.

Thus, the end users, such as washing machine manufacturers, are generally extremely reluctant to perform any calibration and temperature compensation. For this reason, the appliance industry generally uses electromechanical pressure sensors which do not suffer from the above disadvantages. However, electromechanical pressure sensors cannot provide 1% or 2% full scale accuracy.

Thus, several attempts have been made to try and solve these problems of semiconductor sensors, based either on hardware or software calibration schemes.

One solution consists of using trimming potentiometers to calibrate the sensor module. However, the adjustment is not accurate and easy-to-handle and also requires the user to refer to a manual for the calibration data. A further problem with this solution is that it does not provide satisfactory compensation for temperature drift. It is basically not a cost effective solution.

Another solution incorporates an integrated on-chip resistor network which is adjusted by means of a laser trimming process. However, this solution cannot be used in applications with specifications as high as the above specification, since it is not accurate enough to meet an accuracy of 1% or 2% full scale. A further disadvantage of this solution is that it cannot be easily used in conjunction with a software adjustment because the temperature drifts of offset and span are no longer linear.

Other known solutions, such as that disclosed in UK Patent Application No. GB-A- 2197957, use a basic pressure sensor, operational amplifiers, temperature sensors and microcontroller unit (MCU) memory, such as Erasable, Programmable Read-Only Memory (EPROM). The calibration values are stored in the MCU EPROM. Such solutions also have a number of problems associated therewith. The temperature sensor is generally arranged so that it measures the outside temperature and not the temperature of the pressure sensor. Variations between these two temperatures can effect the accuracy of the sensor module. When a sensor, in for example a washing machine, has to be replaced, the MCU needs to be replaced also or the EPROM reprogrammed. Either way, it is costly to replace such a sensor. In addition, the EPROM solution typically only allows a calibration of the sensor module at room temperature only.

Arrangements which use software only to perform the calibration and temperature compensation also suffer from a number of problems. For example, at low pressures the offset may be a large amount of the output signal (more than half of the output signal in the worst case) which means that the accuracy of such a solution will be really poor. The accuracy can be improved by using a high resolution Digital-to-Analog Converter (DAC) at the output, but such DACs are expensive. A further disadvantage with these known software solutions is that the end user must implement the calibration data for each module which means that each module is not interchangeable and therefore expensive to replace.

UK Patent No. GB-B-1429716 discloses a sensor circuit for conditioning a variable frequency sensor in which characteristics of the sensor are stored in a memory in the sensor circuit. The compensation is achieved in software by a computer connected to the sensor circuit. Such a sensor circuit permits interchangeability but since the compensation is performed in software, the circuit will suffer from the offset problems at low pressure discussed above.

There is therefore a need for an interchangeable sensor module which does not suffer from the above disadvantages and problems.

Summary of the Invention

In accordance with a first aspect of the present invention there is provided a sensor module for coupling to a processing unit, comprising:

a semiconductor piezoresistive sensor having an output for providing an output signal representative of the pressure sensed by the sensor;
storage means for storing calibration data for the piezoresistive sensor and for coupling to the processing unit;
temperature detecting means connected to the piezoresistive sensor for generating a temperature signal representative of the detected temperature of the piezoresistive sensor, and for coupling to the processing unit, wherein in operation calibration data and the temperature signal are provided to the processing unit which processes the calibration data and temperature signal to generate control signals; and
offset compensation means coupled to the output of the piezoresistive sensor and for coupling to the processing unit to receive the control signals, the offset compensation means for adjusting the sensor output signal in response to the control signals so as to provide an offset compensated output signal which is independent of variations in sensor performance.

Since the calibration data is stored in the sensor module, the sensor module in accordance with the present invention is fully interchangeable. Thus, in use the sensor module can be replaced without any additional calibration of the module. Furthermore, the sensor module can be considered as a 'black box' which can be interfaced with any processing unit without the need to reprogram the processing unit.

The calibration data includes data which characterises the semiconductor sensor and may include temperature coefficients of offset and span, at least one predetermined offset compensation value, the sensor output signal at a predetermined temperature and the sensor output signal at a different predetermined temperature.

The offset compensation means in the sensor module performs offset compensation within the module itself. This means that the sensor module in accordance with the invention does not suffer from the offset problems at low pressures as do the software solutions discussed above.

Since the temperature detecting means is connected to the piezoresistive sensor, the temperature of the sensor can be determined accurately which ensures more accurate temperature compensation.

Preferably, the semiconductor piezoresistive sensor has a strain gauge resistive element with an input impedance that varies with temperature and the temperature detecting means comprises:

a resistive means coupled in series with the input impedance between first and second supply lines; and
amplifying means having an input coupled to receive a voltage signal generated at a node between the resistive means and the input impedance and an output for coupling to the processing unit, the amplifier for amplifying the voltage signal so as to provide the temperature signal at the output.

Such a temperature detecting means ensures that the real temperature of the die and sensor is detected which means accurate temperature compensation can be achieved. This provides distinct advantages over the known sensors which utilise external temperature sensors, or temperature sensors not connected to the sensor itself and which therefore cannot sense the real temperature of the die.

Preferably, the offset compensation means comprises an offset adjustment means for generating a voltage signal having a predetermined level in dependence on the control signals and for combining the voltage signal with the output signal so as to provide the offset compensated output signal.

Preferably, the control signals comprise at least one pulse width modulated signal, the width of the pulse width modulated signal representing a predetermined offset compensation value from the calibration data or a calculated offset compensation value, the processing unit using the calibration data and detected temperature of the piezoresistive sensor to generate the calculated offset compensation value.

In accordance with a second aspect of the invention there is provided a sensor module for coupling to a processing unit, comprising:

a semiconductor sensor having an output for providing an output signal representative of the parameter sensed by the sensor;
storage means for storing calibration data for the sensor and for coupling to the processing unit;
temperature detecting means coupled to the sensor for generating a temperature signal representative of the detected temperature of the sensor, and for coupling to the processing unit, wherein in operation calibration data and the temperature signal are provided to the processing unit which processes the calibration data and temperature signal to generate control signals, wherein the control signals include at least one pulse width modulated signal, the width of the pulse width modulated signal representing a predetermined offset compensation value from the calibration data or a calculated offset compensation value, the processing unit using the calibration data and detected temperature of the piezoresistive sensor to generate the calculated offset compensation value; and

an offset adjustment means coupled to the output of the sensor and for coupling to the processing unit to receive the at least one pulse width modulated signal, the offset adjustment means comprising:

at least one filter means for filtering the at least one pulse width modulated signal so as to provide a voltage signal having a predetermined level, the predetermined level of the voltage signal depending on the width of the pulse width modulated signal; and

first combining means coupled to the output of the sensor for combining the voltage signal with the output signal so as to provide an offset compensated output signal which is independent of variations in sensor performance.

By using a pulse width modulated control signal, improved offset compensation can be achieved without using a high resolution DAC.

In accordance with a third aspect of the present invention there is provided a sensor module for coupling to a processing unit, comprising:

a semiconductor sensor having an output for providing an output signal representative of the parameter sensed by the sensor;

storage means for storing calibration data for the sensor and for coupling to the processing unit;

temperature detecting means coupled to the sensor for generating a temperature signal representative of the detected temperature of the sensor, the temperature sensing means for coupling to the processing unit, wherein in operation calibration data and the temperature signal are provided to the processing unit which processes the calibration data and temperature signal to generate control signals, wherein the control signals include first and second pulse width modulated signals having different widths, the widths of the first and second pulse width modulated signals each representing a predetermined offset compensation value from the calibration data or a calculated offset compensation value, the processing unit using the calibration data and detected temperature of the piezoresistive sensor to generate the calculated offset compensation value; and

an offset adjustment means coupled to the output of the sensor and for coupling to the processing unit to receive the first and second pulse width modulated signals, the offset adjustment means comprising:

first filter means for filtering the first pulse width modulated signal so as to provide a first voltage signal having a predetermined level, the predetermined level of the first voltage signal depending on the width of the first pulse width modulated signal;

first combining means coupled to the output of the sensor for combining the first voltage signal with the output signal to provide a combined output signal at an output;

second filter means for filtering the second pulse width modulated signal so as to provide a second voltage signal having a predetermined level, the predetermined level of the second voltage signal depending on the width of the second pulse width modulated signal; and

second combining means coupled to the output of the first combining means for combining the second voltage signal with the combined output signal to provide an offset compensated output signal which is independent of variations in sensor performance.

By using two pulse width modulated control signals, high resolution offset compensation can be achieved.

The predetermined offset compensation values, which are stored in the storage means, are such that the output offset can be fixed from module to module. This means that the sensor module in accordance with the invention is easily interchangeable.

Sensor systems incorporating sensor modules in accordance with the invention are also disclosed and claimed.

Brief Description of the Drawings

Preferred embodiments of the present invention will now be described, by way of example only, with reference to the accompanying drawings in which:

FIG. 1 shows a schematic circuit diagram of a sensor system in accordance with a first embodiment of the present invention;

FIG. 2 shows a schematic circuit diagram of an alternative embodiment of the temperature detecting means shown in FIG. 1; and

FIG. 3 shows a schematic circuit diagram of a sensor system in accordance with a second embodiment of the present invention.

## Detailed Description of the Drawings

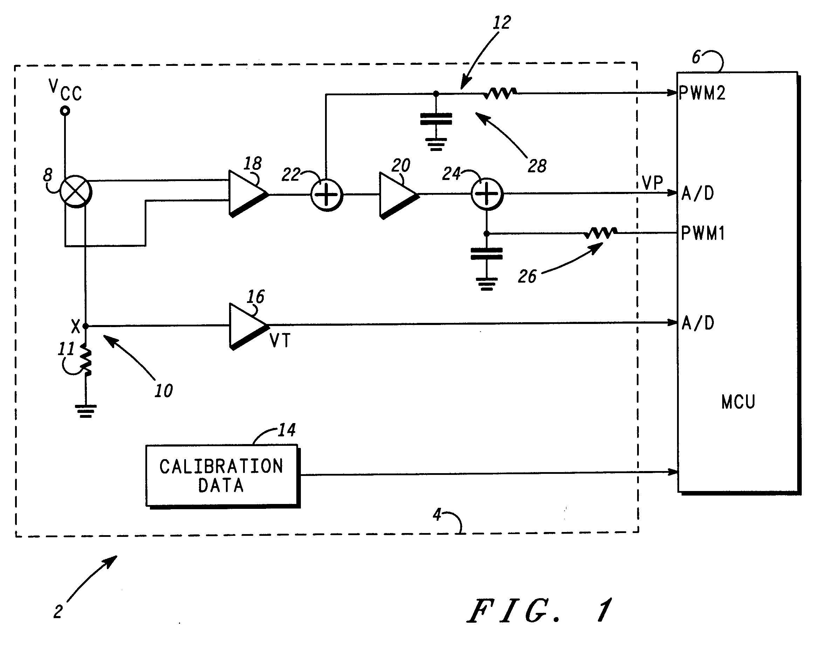

Referring firstly to FIG. 1, a sensor system 2 in accordance with the present invention comprises a sensor module 4 and a processing unit 6, such as a MCU. The sensor module 4 comprises a semiconductor sensor 8, temperature detecting means 10 coupled to the sensor 8 and to the MCU 6, offset compensation means 12 coupled to the MCU 6, and storage means 14 coupled to the MCU 6 for storing calibration data for the sensor module 4.

Preferably, semiconductor sensor 8 comprises a differential semiconductor piezoresistive pressure sensor, such as the MPX12 pressure sensor supplied by Motorola, Inc.

In accordance with a first embodiment of the invention, the differential outputs of the piezoresistive sensor 8 are coupled to inputs of a first amplifier 18. The output of the first amplifier 18 is coupled to an input of a second amplifier 20 via a first combining means 22. The output of the second amplifier 20 is coupled to the MCU 6 via a second combining means 24.

The first 22 and second 24 combining means form part of the offset compensation means 12. The offset compensation means 12 further comprises a first filter 28 coupled between the MCU 6 and the first combining means 22 and a second filter 26 coupled between the MCU 6 and the second combining means 24. The first 28 and second 26 filters both comprise low pass R/C low-pass filters.

The output signals from the first 28 and second 26 filters are combined with the output signals from the first 18 and second 20 amplifiers by the first 22 and second 24 combining means, respectively. FIG. 1 represents the combining means (22, 24) as an additive stage but it may be a subtractive stage.

The temperature detecting means 10 in accordance with a preferred embodiment of the invention uses the fact that the input impedance of a strain gauge semiconductor piezoresistive sensor varies with temperature. The temperature detecting means 10 comprises a small resistor 11 coupled in series with the input impedance of the piezoresistive sensor 8 between a first supply line Vcc and a second supply line GND. An input of an amplifier 16 is coupled to a node X between the input impedance and the resistor 11. The output signal VT provided at an output of the amplifier 16 is coupled to the MCU 6. The temperature T of the piezoresistive sensor 8 is given by the following equation:-

$$T\text{-}T1 = \frac{(VT1\text{-}VT)}{(VT1\text{-}VT2)} \times \frac{(VT2+Vcc)}{(VT+Vcc)} \times (T2\text{-}T1) \tag{1}$$

Where:

T1 is a first reference temperature
VT1 is the output signal at first reference temperature T1
T2 is a second reference temperature
VT2 is the output signal at second reference temperature T2
VT is the output signal at temperature T

The values T1, VT1, T2 and VT2 vary for each piezoresistive sensor and thus must be determined for each sensor. Once determined the values are stored in the EPROM 14. In operation, the MCU receives the output signal VT from the amplifier 16 and utilises equation 1 given above to determine the temperature T of the piezoresistive sensor 8.

The resistor 11 is small compared to the value of the input impedance. Otherwise it may induce some non-linear temperature shifts of the span and offset.

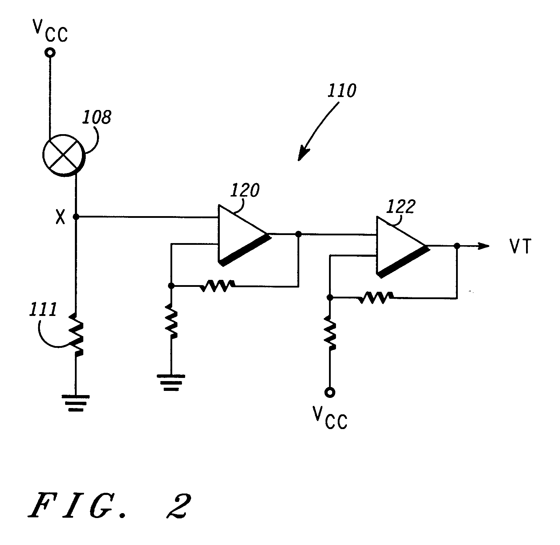

FIG. 2 shows an alternative temperature detecting means 110 to the temperature detecting means 10 shown in FIG. 1. Like components to those of FIG. 1 are referenced by the same reference numeral plus 100.

The node X between the input impedance of the piezoresistive sensor 108 and the resistor 111 is coupled to a first input of a first operational amplifier 120. A second input of the first operational amplifier 120 is coupled to the second supply line GND via a resistor and the output of the first operational amplifier 120 is fed back to the second input via a feedback resistor. The output of the first operational amplifier is coupled to a first input of a second operational amplifier 122. A second input of the second operational amplifier 122 is coupled to the first supply line Vcc via a resistor and the output of the second operational amplifier 122 is fed back to the second input via a feedback resistor. The output signal VT is provided at the output of the second operational amplifier 122 which is coupled to the MCU (not shown).

The storage means 14 comprises EPROM or any other suitable memory and stores the calibration data which is determined experimentally for each module 4. The stored calibration data comprises the values of T1, VT1, T2 and VT2, the temperature coefficients of offset and span, and at least one predetermined offset compensation value.

The operation of the sensor module 4 in accordance with the invention will now be described.

In order to calibrate the sensor module, the MCU enters a specific software routine. At the start of the routine, the MCU reads the contents of the EPROM 14 in which calibration data is stored.

In the preferred embodiment, two predetermined offset compensation values are stored in the EPROM 14; a course predetermined offset compensation value and a fine predetermined offset compensation value.

The MCU 6 uses the predetermined course and fine offset - compensation values from the EPROM 14 to generate control signals which are provided to the first 28 and second 26 filters of the offset compensation means 12. The control signals are then filtered and the filtered control signals are combined with the output signal from the piezoresistive sensor 8 to provide a compensated or calibrated output signal. Preferably, the control signals comprise pulse width modulated signals.

The MCU 6 uses these two predetermined offset compensation values to generate first PWM2 and second PWM1 pulse width modulated control signals. The widths of the first PWM2 and second PWM1 pulse width modulated control signals depend on the course predetermined offset compensation value and fine predetermined offset compensation value, respectively.

The first pulse width modulated control signal PWM2 is filtered by the first filter 28. The bandwidth of the first filter 28 is arranged to be very low in comparison with the frequency of the first pulse width modulated control signal such that the first voltage signal at the output of the first filter 28 is an analog DC voltage signal having a voltage level (Voff1) which is determined by the width of the first pulse width modulated control signal and hence the course offset compensation value. The first combining means 22 combines the first voltage signal with the sensor output signal at the output of the first amplifier 18.

The second pulse width modulated control signal PWM1 is filtered by the second filter 26. The bandwidth of the second filter 26 is arranged to be very low in comparison with the frequency of the second pulse width modulated control signal such that the second voltage signal at the output of the second filter 26 is an analog DC voltage signal having a voltage level (Voff2) which is determined by the width of the second pulse width modulated control signal and hence the fine offset compensation value. The second combining means 24 combines the second voltage signal with the sensor output signal at the output of the second amplifier 20.

The output offset Voff-out is given by the following equation.

$$\text{Voff-out} = -G1 \times G2 \times \text{Voff-sen} + G2 \times \text{Voff1} - (G2 - 1) \times \text{Voff2} \tag{2}$$

Where:

G1 is the gain of first amplifier 18
G2 is the gain of second amplifier 20
Voff1 is the level of the first voltage signal
Voff2 is the level of the second voltage signal
Voff-sen is the sensor offset

The first filter 28 and combining means 22 thus perform a rough offset adjustment to the sensor output signal and the second filter 26 and combining means 24 perform a fine offset adjustment to the sensor output signal such that the sensor offset is subtracted from the sensor output signal. The output pressure offset can thus be adjusted to a fixed voltage regardless of device to device variations.

Thus, the sensor module in accordance with the invention allows a fine adjustment of the output offset (better than 1 least significant bit, if G2 <2) over a wide sensor offset range.

This solution differs from the known arrangements which use DACs or resistive networks or ladders, since it does not require, as in the first case, an additional expensive DAC component nor as in the second case, many other components such as eighteen resistors for an 8-bit offset compensation, a larger printed circuit board and eight outputs of the MCU. The preferred solution which uses two PWM control signals to perform offset compensation needs only two outputs of the MCU, two resistors and two capacitance and thus, provides a low cost solution.

The offset and span of piezoresistive sensors drift linearly with temperature of the die. In order to compensate for temperature drift in the sensor module 4, the MCU 6 enters a specific software routine. At the start of the routine, the MCU 6 reads the contents of the EPROM 14 in which calibration data is stored.

Using the output signal VT provided to the MCU 6 from the temperature detecting amplifier 16, the MCU 6 calculates the temperature of the piezoresistive sensor 8 using equation 1 above and the values of T1, VT1, T2 and VT2 read from the EPROM 14. The MCU 6 then uses the calculated temperature and the temperature coefficients of offset and sensitivity from the EPROM 14 to calculate offset and span compensation values.

The MCU 6 then uses the calculated offset and span compensation values to perform temperature compensation either in hardware or in software.

For hardware offset compensation in accordance with the preferred embodiment, the MCU 6 calculates a course offset compensation value and a fine offset compensation value and uses these values to adjust the widths of the first PWM2 and second PWM1 pulse width modulated control signals respectively. As described above, by way of the resulting first PWM2 and second PWM1 pulse width modulated control signals, the first filter 28 and combining means 22 can thus perform a temperature compensated rough offset adjustment to the sensor output signal and the second filter 26 and combining means 24 can perform a temperature compensated fine offset adjustment to the sensor output signal. The offset value can thus be kept at a fixed value despite variations in temperature of the piezoresistive sensor.

A single offset adjustment for calibration and temperature compensation may be performed using one PWM control signal generated by the MCU 6 as described above. The MCU 6 may then perform a fine adjustment in software.

Temperature drift in sensor span can be compensated for by software in the MCU 6 using the calculated temperature and temperature coefficient of sensitivity stored in the EPROM 14.

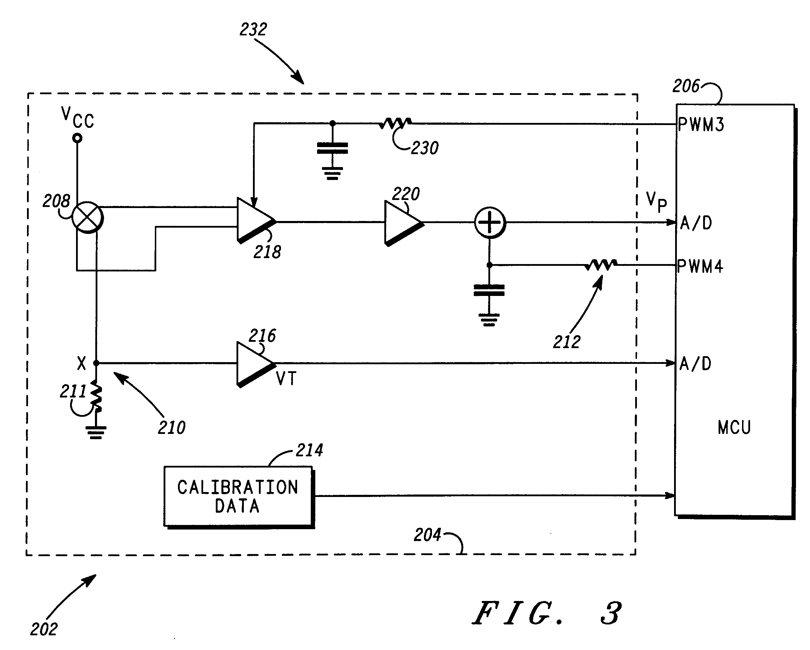

Hardware temperature compensation for span may be achieved using the sensitivity adjustment means 232 in the sensor module 204 in accordance with a second embodiment of the present invention shown in FIG. 3. Like components to those of FIG. 1 are referenced by the same reference numeral plus 200.

In the sensor module 204, the first amplifier 218 is a variable gain amplifier whose gain is varied according to control signals generated from the MCU 206. The MCU 206 uses the temperature T calculated from the output voltage VT from the temperature detecting means 210 and the temperature coefficient of sensitivity stored in the storage means 214 to calculate the span compensation value from which gain control signals are generated. In the preferred embodiment, the gain control signals comprise a pulse width modulated gain control signal PWM3, whose width is dependent on the calculated span compensation value. The pulse width modulated gain control signal PWM3 is filtered by a filter 230, the filtered output signal controlling the gain of the variable gain amplifier 218.

A single offset adjustment is performed by the offset compensation means 212 which receives a pulse width modulated control signal from the MCU 206 and adjusts the offset at the output of the second amplifier 220 as described above. A second offset adjustment can be performed by software in the MCU 206 or by adding an additional amplifier, and combining means and filter at the output of the second amplifier 220 and an additional MCU output to provide another offset pulse width modulated control signal as described above.

In summary, the present invention provides a complete solution to interface a basic semiconductor piezoresistive sensor with a MCU. It also provides the necessary inputs/outputs to perform the sensor calibration and temperature compensation in a cost effective manner.

Although the invention has been described with respect to a semiconductor pressure sensor, it is equally applicable to distance, temperature or other physical parameter.

## Claims

1. A sensor module for coupling to a processing unit, comprising:

   a semiconductor piezoresistive sensor having an output for providing an output signal representative of the pressure sensed by the sensor;
   storage means for storing calibration data for the piezoresistive sensor and for coupling to the processing unit;
   temperature detecting means connected to the piezoresistive sensor for generating a temperature signal representative of the detected temperature of the piezoresistive sensor, and for coupling to the processing unit, wherein in operation calibration data and the temperature signal are provided to the processing unit which processes the calibration data and temperature signal to generate control signals; and
   offset adjustment means coupled to the output of the piezoresistive sensor and for coupling to the processing unit to receive the control signals, the offset adjustment means for generating a voltage signal having a predetermined level in dependence on the control signals and for combining the voltage signal with the output signal so as to provide an offset compensated output signal which is independent of variations in sensor performance.

2. A sensor module according to claim 1 wherein the semiconductor piezoresistive sensor has a strain gauge resistive element with an input impedance that varies with temperature and the temperature detecting means comprises:

   a resistive means coupled in series with the input impedance between first and second supply lines; and
   an amplifier having an input coupled to receive a voltage signal generated at a node between the resistive means and the input impedance and an output for coupling to the processing unit, the amplifier for amplifying the voltage signal so as to provide the temperature signal at the output.

3. A sensor module according to claim 1 or 2 wherein the control signals generated by the processing unit and for coupling to the offset adjustment means include at least one pulse width modulated signal, the width of the pulse width modulated signal representing a predetermined offset compensation value from the calibration data or a calculated offset compensation value, the processing unit using the calibration data and detected temperature of the piezoresistive sensor to generate the calculated offset compensation value, and wherein the offset adjustment means comprises:

at least one filter means for filtering the at least one pulse width modulated signal so as to provide the voltage signal, the predetermined level of the voltage signal depending on the width of the pulse width modulated signal; and
first combining means coupled to the output of the piezoresistive sensor for combining the voltage signal with the output signal to provide the offset compensated output signal.

4. A sensor module according to claim 1 or 2 wherein the control signals generated by the processing unit and for coupling to the offset adjustment means include first and second pulse width modulated signals having different widths, the widths of the first and second pulse width modulated signals each representing a predetermined offset compensation value from the calibration data or a calculated offset compensation value, the processing unit using the calibration data and detected temperature of the piezoresistive sensor to generate the calculated offset compensation value, and wherein the offset adjustment means comprises:

first filter means for filtering the first pulse width modulated signal so as to provide a first voltage signal having a predetermined level, the predetermined level of the first voltage signal depending on the width of the first pulse width modulated signal;
first combining means coupled to the output of the piezoresistive sensor for combining the first voltage signal with the output signal to provide a combined output signal at an output;
second filter means for filtering the second pulse width modulated signal so as to provide a second voltage signal having a predetermined level, the predetermined level of the second voltage signal depending on the width of the second pulse width modulated signal; and
second combining means coupled to the output of the first combining means for combining the second voltage signal with the combined output signal to provide the offset compensated output signal.

5. A sensor module according to claim 4 wherein the first and second filter means comprise first and second low pass R/C filters, respectively, the first and second low pass R/C filters having low bandwidths compared to the frequency of the first and second pulse width modulated signals.

6. A sensor module according to claim 1, 2, 3, 4, or 5 wherein the control signals generated by the processing unit include gain control signals and wherein the sensor module further comprises:

sensitivity adjustment means for adjusting the gain of the output signal in dependence on the gain control signals so as to compensate for variations in span of the sensor output signal.

7. A sensor module according to claim 3, 4, or 5 and claim 6 wherein the sensitivity adjustment means comprises at least one variable gain amplifier coupled in series between the output of the piezoresistive sensor and the first combining means, the gain of the at least one variable gain amplifier being controlled by the gain control signals generated by the processing unit.

8. A sensor system comprising:

a sensor module according to any preceding claim; and
a processing unit, the processing unit being coupled to the sensor module so as to receive the temperature signal and the calibration data from the storage means, the processing means using the calibration data and temperature signal to determine the temperature of the sensor, and to generate the control signals for coupling to the offset compensation means.

9. A sensor module for coupling to a processing unit, comprising:

a semiconductor sensor having an output for providing an output signal representative of the parameter sensed by the sensor;
storage means for storing calibration data for the sensor and for coupling to the processing unit;
temperature detecting means coupled to the sensor for generating a temperature signal representative of the detected temperature of the sensor, and for coupling to the processing unit, wherein in operation calibration data and the temperature signal are provided to the processing unit which processes the calibration data and temperature signal to generate control signals, wherein the control signals include at least one pulse width modulated signal, the width of the pulse width modulated signal representing a predetermined offset compensation value from the calibration data or a calculated offset compensation value, the processing unit using the calibration data and detected temperature of the piezoresistive sensor to generate the calculated offset compensation value; and

an offset adjustment means coupled to the output of the sensor and for coupling to the processing unit to receive the at least one pulse width modulated signal, the offset adjustment means comprising:

at least one filter means for filtering the at least one pulse width modulated signal so as to provide a voltage signal having a predetermined level, the predetermined level of the voltage signal depending on the width of the pulse width modulated signal; and

first combining means coupled to the output of the sensor for combining the voltage signal with the output signal so as to provide an offset compensated output signal which is independent of variations in sensor performance.

**10.** A sensor system comprising:

a sensor module according to claim 9; and

a processing unit, the processing unit being coupled to the sensor module so as to receive the temperature signal and the calibration data from the storage means, and to receive the offset compensated output signal, the processing means using the calibration data and temperature signal to determine the temperature of the sensor, and to generate the at least one first pulse width modulated signal, and combining a predetermined offset compensation value from the calibration data or a calculated offset compensation value with the offset compensated output signal to provide a twice offset compensated output signal, the processing unit using the calibration data and detected temperature of the sensor to generate the calculated offset compensation value.

**11.** A sensor system according to claim 10 wherein the processing unit uses the calibration data and the determined temperature of the sensor to generate a gain control signal, the processing unit adjusting the gain of the twice offset compensated output signal in dependence on the gain control signal so as to compensate for variations in span of the output signal.

**12.** A sensor module according to claim 9 or a sensor system according to claim 10 wherein the control signals generated by the processing unit include gain control signals and wherein the sensor module further comprises:

sensitivity adjustment means for adjusting the gain of the output signal in dependence on the gain control signals so as to compensate for variations in span of the sensor output signal.

**13.** A sensor module according to claim 9 or 12 or a sensor system according to claim 10 or 12 wherein the sensitivity adjustment means comprises at least one variable gain amplifier coupled in series between the output of the sensor and the first combining means, the gain of the at least one variable gain amplifier being controlled by the gain control signals generated by the processing unit.

**14.** A sensor module for coupling to a processing unit, comprising:

a semiconductor sensor having an output for providing an output signal representative of the parameter sensed by the sensor;

storage means for storing calibration data for the sensor and for coupling to the processing unit;

temperature detecting means coupled to the sensor for generating a temperature signal representative of the detected temperature of the sensor, the temperature sensing means for coupling to the processing unit, wherein in operation calibration data and the temperature signal are provided to the processing unit which processes the calibration data and temperature signal to generate control signals, wherein the control signals include first and second pulse width modulated signals having different widths, the widths of the first and second pulse width modulated signals each representing a predetermined offset compensation value from the calibration data or a calculated offset compensation value, the processing unit using the calibration data and detected temperature of the piezoresistive sensor to generate the calculated offset compensation value; and

an offset adjustment means coupled to the output of the sensor and for coupling to the processing unit to receive the first and second pulse width modulated signals, the offset adjustment means comprising:

first filter means for filtering the first pulse width modulated signal so as to provide a first voltage signal having a predetermined level, the predetermined level of the first voltage signal depending on the width of the first pulse width modulated signal;

first combining means coupled to the output of the sensor for combining the first voltage signal with the output signal to provide a combined output signal at an output;

second filter means for filtering the second pulse width modulated signal so as to provide a second voltage signal having a predetermined level, the predetermined level of the second voltage signal depending on the width of the second pulse width modulated signal; and

second combining means coupled to the output of the first combining means for combining the second voltage signal with the combined output signal to provide an offset compensated output signal which is independent of variations in sensor performance.

**15.** A sensor system comprising:

a sensor module according to claim 14; and

a processing unit, the processing unit being coupled to the sensor module so as to receive the temperature signal and the calibration data from the storage means, and to receive the offset compensated output signal, the processing means using the calibration data and temperature signal to determine the temperature of the sensor, and to generate the first and second pulse width modulated signals.

**16.** A sensor system according to claim 15 wherein the processing unit generates a gain control signal in dependence on the calibration data and the determined temperature of the sensor, and wherein the processing unit adjusts the gain of the offset compensated output signal in dependence on the gain control signal so as to compensate for variations in span of the output signal.

**17.** A sensor module according to claim 14 or a sensor system according to claim 16 wherein the control signals generated by the processing unit include gain control signals and wherein the sensor module further comprises:

sensitivity adjustment means for adjusting the gain of the output signal in dependence on the gain control signals so as to compensate for variations in span of the sensor output signal.

**18.** A sensor module according to claim 17 or a sensor system according to claim 17 wherein the sensitivity adjustment means comprises at least one variable gain amplifier coupled in series between the output of the sensor and the first combining means, the gain of the at least one variable gain amplifier being controlled by the gain control signals generated by the processing unit.

FIG. 1

FIG. 2

FIG. 3

EP 0 758 739 A1

# EP 0 758 739 A1

<table>
<tr><td colspan="5">

| | European Patent Office | **EUROPEAN SEARCH REPORT** | Application Number |
| | | | EP 96 11 2875 |

</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | EP 0 263 305 A (BOSCH GMBH ROBERT) 13 April 1988 | 1,2,6,7 | G01D3/028 G01L1/22 G01L9/06 |
| A | * column 2, line 17 - column 4, line 55; figure * | 8-18 | |
| Y | US 4 598 381 A (CUCCI GERALD R) 1 July 1986 | 1,2,6,7 | |
| A | * column 6, line 32 - line 61; figure 2 * | 9,14 | |
| Y | WO 88 06719 A (SECR DEFENCE BRIT) 7 September 1988 * page 5, line 9 - page 6, line 3; figure 1 * | 2 | |
| A | DE 34 46 248 A (BOSCH GMBH ROBERT) 19 June 1986 * page 7, last paragraph - page 11, paragraph 1; figures 1,2 * | 1,2,6-18 | |
| A | GB 2 183 342 A (JOHNSON MATTHEY PLC) 3 June 1987 * abstract; figure * | 1,9,14 | TECHNICAL FIELDS SEARCHED (Int.Cl.6) |
| A | DE 43 00 371 A (TOYODA AUTOMATIC LOOM WORKS) 15 July 1993 * abstract; claim 1; figure 1 * | 3,10 | G01D G01L |

The present search report has been drawn up for all claims

| Place of search | Date of completion of the search | Examiner |
|---|---|---|
| THE HAGUE | 11 November 1996 | Chapple, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)